(19) Europäisches Patentamt

European Patent Office

Office européen des brevets

(11) **EP 1 250 604 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*G01P 5/12* (2006.01)  *G01F 1/684* (2006.01)

(21) Anmeldenummer: **00991774.1**

(86) Internationale Anmeldenummer:
**PCT/DE2000/004611**

(22) Anmeldetag: **22.12.2000**

(87) Internationale Veröffentlichungsnummer:
**WO 2001/051933 (19.07.2001 Gazette 2001/29)**

(54) **GASSTRÖMUNGS-BESTIMMUNGSVERFAHREN UND -VORRICHTUNG**

METHOD AND DEVICE FOR DETERMINING GAS FLOW

DISPOSITIF ET PROCEDE POUR DETERMINER DES CARACTERISTIQUES D'UN ECOULEMENT GAZEUX

(84) Benannte Vertragsstaaten:
**DE FR GB IT**

(30) Priorität: **08.01.2000 DE 10000496**

(43) Veröffentlichungstag der Anmeldung:
**23.10.2002 Patentblatt 2002/43**

(73) Patentinhaber: **ROBERT BOSCH GMBH**
**70442 Stuttgart (DE)**

(72) Erfinder:
• **LEMBKE, Manfred**
**70839 Gerlingen (DE)**
• **HECHT, Hans**
**70825 Korntal-Münchingen (DE)**
• **KONZELMANN, Uwe**
**71679 Asperg (DE)**

(56) Entgegenhaltungen:
DE-A- 19 601 791  US-A- 5 237 867

**Beschreibung**

Stand der Technik

Die vorliegende Erfindung betrifft ein Gasströmungs-Besdmmungsverfahren mit den Schritten Bereitstellen einer Sensoreinrichtung mit einer Membran und einer diese umgebenden Einfassung; Schaffen eines vorbestimmten Temperaturprofils auf der Membran; Leiten der zu bestimmenden Gasströmung in einer vorbestimmten Strömungsrichtung Ober die Membran; Erfassen der durch die Gasströmung verursachten Änderung des Temperaturprofils; und Bestimmen der Gasströmung anhand der erfassten Änderung. Ebenfalls betrifft die Erfindung eine entsprechende Gasströmungs-Bestimmungsvorrichtung.

Aus der Schrift US 5,237,867 A ist ein Massenflusssensor auf Siliziumbasis mit zwei getrennt heizbaren Elementen bekannt. Das erste Heizelement regelt die Temperatur des Sensors auf eine gewünschte Ausgangstemperatur. Das zweite Heizelement ist mit dem ersten Heizelement thermisch verbunden und wird derart betrieben, dass die Differenz der Temperatur zwischen der Umgebung und dem Sensor konstant bleibt. Zu diesem Zweck wird der Widerstand des ersten Heizelements mit dem Widerstand eines thermisch vom Sensorelement des Massenflusssensors getrennten nicht geheizten Widerstandselements verglichen.

Aus der Schrift DE 196 01 791 A1 ist ebenfalls ein Sensorelement auf Siliziumbasis bekannt. Dabei wird in einem Ausführungsbeispiel auf einer Membran ein Heizelement sowie beiderseitig des Heizelements je ein Temperaturmesselement angeordnet.

Obwohl auf beliebige Gasströmungen anwendbar, werden die vorliegende Erfindung sowie die ihr zugrunde liegende Problematik in Bezug auf einen an Bord des Kraftfahrzeugs befindlichen Luftmassenmesser erläutert.

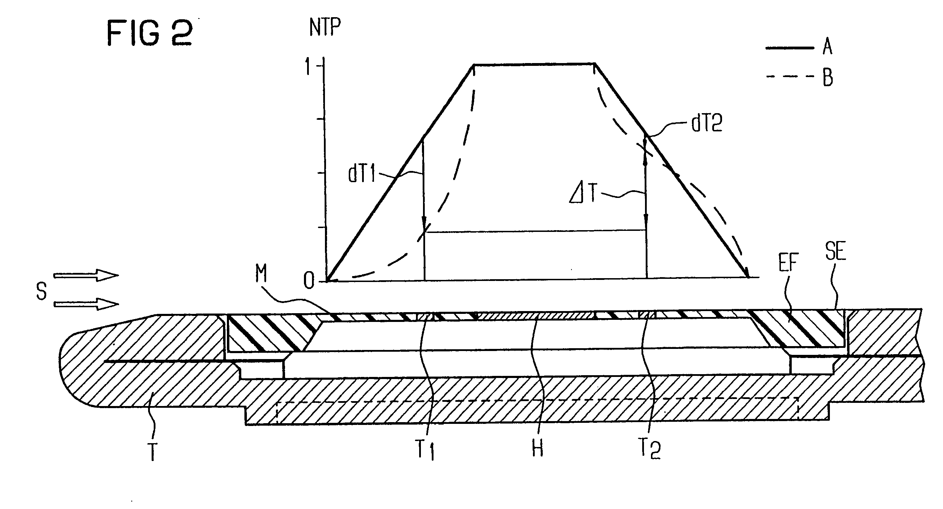

Figur 2 zeigt eine bekannte Gasströmungs-Bestimmungsvorrichtung in Form solch eines Luftmassenmessers im Querschnitt.

Dieser Luftmassenmesser hat eine Sensoreinrichtung SE mit einer Membran M und einer diese umgebenden Einfassung EF.

Die Sensoreinrichtung SE mit der Membran M und der diese umgebenden Einfassung EF ist einstückig in Silizium-Mikromechanik-Technologie hergestellt. T bezeichnet eine Halterung in Form eines Trägerblechs.

Weiterhin ist eine Temperaturprofil-Erzeugungseinrichtung zum Schaffen eines vorbestimmten Temperaturprofils auf der Membran M vorgesehen.

Eine Heizeinrichtung dient zum Heizen eines Mittelbereichs H der Membran M auf eine vorbestimmte Temperatur zum Schaffen eines trapezförmigen Temperaturprofils auf der Membran M, welches im Mittelbereich ein Plateau aufweist, das zum Randbereich hin im wesentlichen linear abfällt.

Die Kurve A des darüber gezeigten normierten Temperaturprofils zeigt den Zustand des Temperaturprofils ohne Anströmung. Die Kurve B zeigt den Zustand des Temperaturprofils mit Anströmung. Durch die Anströmung mit der Luft ergibt sich also eine Änderung des Temperaturprofils auf der Membran M im Bereich, in welchem es ohne Anströmung zum Randbereich hin im wesentlichen linear abfällt. Diese Änderung rührt vom Wärmetransport des in Strömungsrichtung S anströmenden Gases her.

Eine Erfassungseinrichtung T1, T2 bestehend aus zwei Temperatursensoren in Form von Pt-Widerständen ist derart gestaltet, daß sie die durch die Gasströmung verursachte Temperaturänderung dT1 an einem ersten Ort auf der Membran M stromaufwärts des geheizten Mittelbereichs H und die durch die Gasströmung verursachte Temperaturänderung dT2 an einem zweiten Ort auf der Membran M stromabwärts des geheizten Mittelbereichs H erfaßt.

Weiterhin ist eine nicht gezeigte Bestimmungseinrichtung vorgesehen, die derart gestaltet ist, daß sie die Gasströmung anhand der Differenz der erfaßten Temperaturänderungen bestimmt, welche gegeben ist durch $\Delta T = dT1 - dT2$.

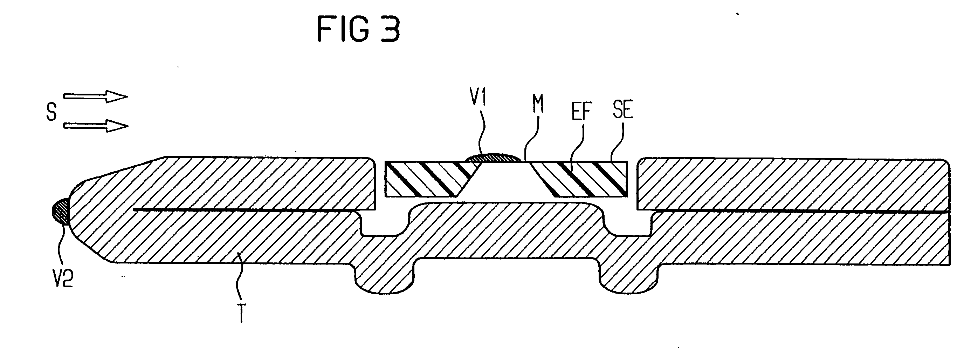

Fig. 3 zeigt eine schematische Darstellung vom Verschmutzungen auf der bekannten Gasströmungs-Bestimmungsvorrichtung in Form des Luftmassenmessers.

Bei dem in Fig. 2 gezeigten Luftmassenmesser treten Kennlinienabweichungen durch asymmetrische Verschmutzungen V1 der Membran M auf. Durch die gezeigte Verschmutzung V1 auf der Anströmseite wird dort durch die bessere thermische Anbindung an den Membranrand (geringerer Wärmewiderstand) die Temperatur abgesenkt. Hinzukommen kann eine geänderte thermische Ankopplung an das anströmende Gas im verschmutzten Bereich.

VORTEILE DER ERFINDUNG

Das erfindungsgemäße Gasströmunas-Bestimmungsverfahren mit den Merkmalen des Anspruchs 1 sowie die entsprechende Gasströmungs-Bestimmungsvorrichtung nach Anspruch 6 weisen gegenüber den bekannten Lösungsansätzen den Vorteil auf, daß der Einfluß von Verunreinigungen auf der Membran effektiv minimiert werden kann.

Die der vorliegenden Erfindung zugrundeliegende Idee besteht darin, daß ein Regeln der Temperatur an einem dritten Ort auf der Membran stromaufwärts des ersten Orts und optionellerweise an einem vierten Ort stromabwärts des zweiten Orts auf einen Wert entsprechend dem lokalen Wert des vorbestimmten Temperaturprofils erfolgt. Dabei ist das Regeln am dritten Ort wichtiger als das Regeln am vierten Ort, da am dritten Ort größere Abweichungen als am vierten Ort zu erwarten sind.

In den abhängigen Ansprüchen finden sich vorteilhafte Weiterbildungen und Verbesserungen des jeweiligen Gegenstandes der Erfindung.

Gemäß einer bevorzugten Weiterbildung erfolgt ein Heizen eines Mittelbereichs der Membran auf eine vorbestimmte Temperatur zum Schaffen eines trapezförmigen Temperaturprofils auf der Membran, welches im Mittelbereich ein Plateau aufweist, das zum Randbereich hin im wesentlichen linear abfällt.

Gemäß einer weiteren bevorzugten Weiterbildung erfolgen ein Erfassen der durch die Gasströmung verursachten Temperaturänderung an einem ersten Ort auf der Membran stromaufwärts des geheizten Mittelbereichs und an einem zweiten Ort auf der Membran stromabwärts des geheizten Mittelbereichs sowie ein Bestimmen der Gasströmung anhand der Differenz der erfaßten Temperaturänderungen.

Gemäß einer weiteren bevorzugten Weiterbildung erfolgt das Heizen eines Mittelbereichs der Membran auf eine vorbestimmte Temperatur oberhalb der Temperatur der zu erfassenden Gasströmung.

Gemäß einer weiteren bevorzugten Weiterbildung werden der dritte und vierte Ort derart ausgewählt, daß sie im Randbereich der Membran liegen.

ZEICHNUNGEN

Ausführungsbeispiele der Erfindung sind in den Zeichnungen dargestellt und in der nachfolgenden Beschreibung näher erläutert.

Es zeigen:

Fig. 1     eine Ausführungsform der Gasströmungs-Bestimmungsvorrichtung gemäß der vorliegenden Erfindung im Querschnitt;

Fig. 2     eine bekannte Gasströmungs-Bestimmungsvorrichtung im Querschnitt; und

Fig. 3     eine schematische Darstellung vom Verschmutzungen auf der bekannten Gasströmungs-Bestimmungsvorrichtung.

BESCHREIBUNG DER AUSFÜHRUNGSBEISPIELE

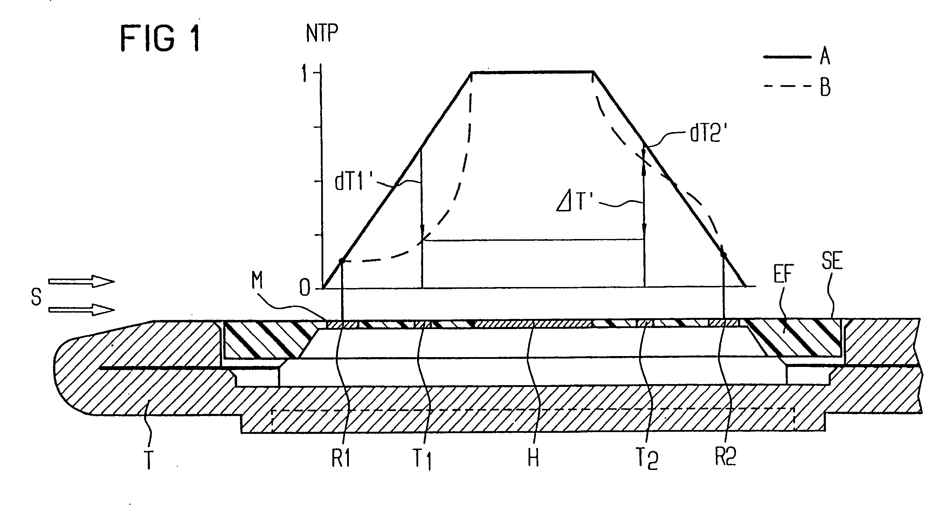

Fig. 1 zeigt eine Ausführungsform der Gasströmungs-Bestimmungsvorrichtung gemäß der vorliegenden Erfindung ebenfalls in Form eines Luftmassenmessers im Querschnitt.

Dieser Luftmassenmesser ist prinzipiell ähnlich aufgebaut wie der bekannte Luftmassenmesser nach Fig. 2.

Auch er hat eine Sensoreinrichtung SE mit einer Membran M und einer diese umgebenden Einfassung EF, die einstückig in Silizium-Mikromechanik-Technologie hergestellt ist sowie eine Halterung in Form eines Trägerblechs T.

Die gleiche Heizeinrichtung dient zum Heizen eines Mittelbereichs H der Membran M auf eine vorbestimmte Temperatur zum Schaffen eines trapezförmigen Temperaturprofils auf der Membran M, welches im Mittelbereich ein Plateau aufweist, das zum Randbereich hin im wesentlichen linear abfällt.

Zusätzlich vorgesehen ist eine Regelungseinrichtung mit zwei Reglern R1, R2 zum Regeln der Temperatur an einem dritten Ort auf der Membran M stromaufwärts des ersten Orts und an einem vierten Ort stromabwärts des zweiten Orts auf einen Wert entsprechend dem lokalen Wert des vorbestimmten Temperaturprofils.

Die Kurve A des darüber gezeigten normierten Temperaturprofils zeigt den Zustand des Temperaturprofils ohne Anströmung. Die Kurve B zeigt den Zustand des Temperaturprofils mit Anströmung. Durch die Anströmung mit der Luft ergibt sich also eine Änderung des Temperaturprofils auf der Membran M im Bereich, in welchem es ohne Anströmung zum Randbereich hin im wesentlichen linear abfällt. Diese Änderung rührt vom Wärmetransport des in Strömungsrichtung S anströmenden Gases her.

Die Erfassungseinrichtung T1, T2 bestehend aus zwei Temperatursensoren ist derart gestaltet, daß sie die durch die Gasströmung verursachte Temperaturänderung dT1' am ersten Ort auf der Membran M stromaufwärts des geheizten Mittelbereichs H und die durch die Gasströmung verursachte Temperaturänderung dT2' am zweiten Ort auf der Membran M stromabwärts des geheizten Mittelbereichs H erfaßt.

Weiterhin ist eine nicht gezeigte Bestimmungseinrichtung vorgesehen, die derart gestaltet ist, daß sie die Gasströmung anhand der Differenz der erfaßten Temperaturänderungen bestimmt, welche gegeben ist durch $\Delta T' = dT1' - dT2'$.

Die Auswirkung der in Fig. 2 gezeigten Verschmutzung kann bei dieser Ausführungsform durch die Regelungseinrichtung R1, R2 so reduziert werden, daß sie keinen nennenswerten Einfluß auf das Kennlinienverhalten mehr hat.

Es gilt also

$$\Delta T = dT1 - dT2 \approx \Delta T' = dT1' - dT2'$$

Die Temperatur, auf die jeweils geregelt wird, ist niedriger als im geheizten Mittelbereich H, aber höher als in der Einfassung EF.

Tritt nun beispielsweise die in Fig. 3 gezeigte Verschmutzung V1 auf, so führt die dadurch veränderte Wärmeleitung zum Membranrand nicht mehr zu einer abgesenkten Temperaturdifferenz, da durch die erhöhte Heizleistung im Temperaturregelbereich eine entsprechende Kompensation erfolgt.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere ist die Erfindung nicht auf einen Luftmassenmesser beschränkt, sondern für beliebige Gase einsetzbar.

**Patentansprüche**

1.  Gassttömungs-Bestimmungsverfahren mit den Schritten

    - Bereitstellen einer Sensoreinrichtung (SE) mit einer Membran (M) und einer diese umgebende Einfassung (EF);
    - Schaffen eines vorbestimmten Temperaturprofils auf der Membran (M) mittels einer Heizeinrichtung (H);
    - Leiten der zu bestimmenden Gasströmung in einer vorbestimmten Strömungsrichtung (S) über die Membran (M);
    - Erfassen der durch die Gasströmung verursachten Änderung des Temperaturprofils; und
    - Bestimmen der Gasströmung anhand der erfassten Änderung;
    **dadurch gekennzeichnet, dass**
    auf der Membran
    - an einem ersten Ort stromaufwärts der Heizeinrichtung und
    - an einem zweiten Ort stromabwärts der Heizeinrichtung
    eine durch die Gasströmung verursachte Temperaturänderung erfasst wird,
    wobei in einem weiteren Schritt ein Regeln der Temperatur
    - an einem dritten Ort auf der Membran (M) stromaufwärts des ersten Orts und
    - optionellerweise an einem vierten Ort stromabwärts des zweiten Orts auf einen Wert entsprechend dem lokalen Wert des vorbestimmten Temperaturprofils vorgesehen ist.

2.  Verfahren nach Anspruch 1, **dadurch gekennzeichnet, dass** ein Mittelbereich (H) der Membran (M) durch die Heizvorrichtung auf eine vorbestimmte Temperatur zum Schaffen eines trapezförmigen Temperaturprofils auf der Membran (M) geheizt wird, wobei das Temperaturprofil im Mittelbereich ein Plateau aufweist, das zum Randbereich hin im Wesentlichen linear abfällt.

3.  Verfahren nach Anspruch 1 oder 2, **gekennzeichnet durch** die Schritte:

    Erfassen der **durch** die Gasströmung verursachten Temperaturänderung an einem ersten Ort auf der Membran (M) stromaufwärts des geheizten Mittelbereichs (H) und
    an einem zweiten Ort auf der Membran (M) stromabwärts des geheizten Mittelbereichs (H); und
    Bestimmen der Gasströmung anhand der Differenz der erfassten Temperaturänderungen.

4.  Verfahren nach Anspruch 1, 2, oder 3, **dadurch gekennzeichnet, dass** das Heizen des Mittelbereichs (H) der Membran (M) auf eine vorbestimmte Temperatur oberhalb der Temperatur der zu erfassenden Gasströmung erfolgt.

5.  Verfahren nach einem der vorhergehenden Ansprüche, **dadurch gekennzeichnet, dass** der dritte und vierte Ort derart ausgewählt werden, dass sie im Randbereich der Membran (M) liegen.

6.  Gasströmungs-Hestimmuogsvonrichtung mit:

- einer Sensoreinrichtung (SE) mit einer Membran (M) und einer diese umgebende Einfassung (EF);
- einer Heizeinrichtung zum Schaffen eines vorbestimmten Temperaturprofils auf der Membran (M);
- einer Erfassungseinrichtung (T1,T2) aus zwei Temperatursensoren zum Erfassen der durch die in einer vorbestimmten Strömungsrichtung (S) über die Membran geführten Gasströmung verursachten Änderung des Temperaturprofils; und
- einer Bestimmungseinrichtung zum Bestimmen der Gasströmung anhand der erfassten Änderung;
**dadurch gekennzeichnet, dass**
- auf der Membran

  o ein erster Ort stromaufwärts der Heizeinrichtung und
  o ein zweiter Ort stromabwärts der Heizeinrichtung

vorgesehen ist, wobei an dem ersten und zweiten Ort eine durch die Gasströmung verursachte Temperaturänderung mittels der beiden Temperatursensoren erfasst wird, und
- eine Regelungseinrichtung (R1, R2) zum Regeln der Temperatur

  - an einem dritten Ort auf der Membran (M) stromaufwärts des ersten Orts und
  - optionellerweise an einem vierten Ort stromabwärts des zweiten Orts auf einen Wert entsprechend dem lokalen Wert des vorbestimmten Temperaturprofils vorgesehen ist.

7. Vorrichtung nach Anspruch 6, **dadurch gekennzeichnet, dass**
die Heizeinrichtung zum Heizen eines Mittelbereichs (H) der Membran (M) auf eine vorbestimmte Temperatur zum Schaffen eines trapezförmigen Temperaturprofils auf der Membran (M) vorgesehen ist, wobei das Temperaturprofil im Mittelbereich ein Plateau aufweist, das zum Randbereich hin im Wesentlichen linear abfällt.

8. Vorrichtung nach Anspruch 6 oder 7, **dadurch gekennzeichnet, dass** die Erfassungseinrichtung (T1, T2) derart gestaltet ist, dass sie die durch die Gasströmung verursachte Temperaturänderung an einem ersten Ort auf der Membran (M) stromaufwärts des geheizten Mittel bereichs (H) und an einem zweiten Ort auf der Membran (M) stromabwärts des geheizten Mittelbereichs (H) erfasst; und die Bestimmungseinrichtung derart gestaltet ist, dass sie die Gasströmung anhand der Differenz der erfassten Temperaturänderungen bestimmt.

9. Vorrichtung nach einem der vorhergehenden Ansprüche, **dadurch gekennzeichnet, dass** der dritte und vierte Ort im Randbereich der Membran (M) liegen.

10. Vorrichtung nach einem der vorhergehenden Ansprüche, **dadurch gekennzeichnet, dass** die Sensoreinrichtung (SE) mit der Membran (M) und der diese umgebenden Einfassung (EF) einstückig in Silizium-Mikromechanik-Technologie hergestellt ist.

**Claims**

1. Method for determining gas flow, comprising the steps of

   - providing a sensor device (SE) having a membrane (M) and a mount (EF) surrounding the membrane;
   - creating a predetermined temperature profile on the membrane (M) by means of a heating device (H);
   - passing the gas flow to be determined over the membrane (M) in a predetermined direction of flow (S);
   - recording the change in temperature profile caused by the gas flow; and
   - determining the gas flow on the basis of the recorded change;
   **characterized in that**
   on the membrane, a temperature change caused by the gas flow is recorded
   - at a first location upstream of the heating device, and
   - at a second location downstream of the heating device,
   and in a further step the temperature is controlled to a value corresponding to the local value of the predetermined temperature profile
   - at a third location on the membrane (M) upstream of the first location, and
   - optionally at a fourth location downstream of the second location.

2. Method according to Claim 1, **characterized in that** a central region (H) of the membrane (M) is heated by the heating device to a predetermined temperature in order to create a trapezium-shaped temperature profile on the membrane (M), the temperature profile having a plateau in the central region, with the plateau dropping off substantially linearly towards the edge region.

3. Method according to Claim 1 or 2, **characterized by** the steps of:

recording the temperature change caused by the gas flow at a first location on the membrane (M) upstream of the heated central region (H) and at a second location on the membrane (M) downstream of the heated central region (H); and
determining the gas flow on the basis of the difference between the recorded temperature changes.

4. Method according to Claim 1, 2 or 3, **characterized in that** the heating of the central region (H) of the membrane (M) is carried out to a predetermined temperature above the temperature of the gas flow that is to be recorded.

5. Method according to one of the preceding claims, **characterized in that** the third and fourth locations are selected in such a manner that they lie in the edge region of the membrane (M).

6. Device for determining gas flow, having:

 - a sensor device (SE) having a membrane (M) and a mount (EF) surrounding the membrane;
 - a heating device for creating a predetermined temperature profile on the membrane (M);
 - a recording device (T1, T2) comprising two temperature sensors for recording the change in the temperature profile caused by the gas flow which is guided over the membrane in a predetermined direction of flow (S); and
 - a determination device for determining the gas flow on the basis of the recorded change;
 **characterized in that**
 - on the membrane

 o a first location upstream of the heating device, and
 o a second location downstream of the heating device

 are provided, with a temperature change caused by the gas flow being recorded by means of the two temperature sensors at the first location and the second location, and
 - a control device (R1, R2) for controlling the temperature to a value corresponding to the local value of the predetermined temperature profile is provided

 - at a third location on the membrane (M) upstream of the first location, and
 - optionally at a fourth location downstream of the second location.

7. Device according to Claim 6, **characterized in that** the heating device is provided for the purpose of heating a central region (H) of the membrane (M) to a predetermined temperature in order to create a trapezium-shaped temperature profile on the membrane (M), the temperature profile having a plateau in the central region, with the plateau dropping off substantially linearly towards the edge region.

8. Device according to Claim 6 or 7, **characterized in that** the recording device (T1, T2) is configured in such a manner that it records the temperature change caused by the gas flow at a first location on the membrane (M) upstream of the heated central region (H) and at a second location on the membrane (M) downstream of the heated central region (H); and the determination device is configured in such a manner that it determines the gas flow on the basis of the difference in the recorded temperature changes.

9. Device according to one of the preceding claims, **characterized in that** the third and fourth locations lie in the edge region of the membrane (M).

10. Device according to one of the preceding claims, **characterized in that** the sensor device (SE) with the membrane (M) and the mount (EF) surrounding the membrane is produced as a single piece using silicon micromechanical technology.

**Revendications**

1. Procédé pour déterminer des caractéristiques d'un écoulement gazeux, comprenant les étapes suivantes:

   - installer un dispositif de capteur (SE) avec une membrane (M) et une monture (EF) entourant celle-ci;
   - créer un profil de température prédéterminé sur la membrane (M) au moyen d'un dispositif de chauffage (H);
   - conduire l'écoulement gazeux à déterminer dans une direction d'écoulement prédéterminée (S) au-dessus de la membrane (M);
   - détecter la variation du profil de température provoquée par l'écoulement gazeux; et
   - déterminer des caractéristiques de l'écoulement gazeux au moyen de la variation détectée,
   **caractérisé en ce qu'**
   on détecte une variation de la température provoquée par l'écoulement gazeux sur la membrane
   - en un premier site en amont du dispositif de chauffage et
   - en un deuxième site en aval du dispositif de chauffage, et
   dans une étape supplémentaire, une régulation de la température est prévue
   - en un troisième site, sur la membrane (M) en amont du prmier site, et
   - en option sur un quatrième site en aval du deuxième site,

   à une valeur correspondant à la valeur locale du profil de température prédéterminé.

2. Procédé selon la revendication 1,
   **caractérisé en ce qu'**
   on chauffe une zone centrale (H) de la membrane (M) au moyen du dispositif de chauffage à une température prédéterminée pour créer un profil de température trapézoïdal sur la membrane (M), le profil de température présentant dans la zone centrale un plateau, qui diminue de façon sensiblement linéaire vers la zone de bord.

3. Procédé selon la revendication 1 ou 2,
   **caractérisé par**
   les étapes suivantes:

   - détecter la variation de la température provoquée par l'écoulement gazeux en un premier site sur la membrane (M) en amont de la zone centrale chauffée (H) et en un deuxième site sur la membrane (M) en aval de la zone centrale chauffée (H); et
   - déterminer des caractéristiques de l'écoulement gazeux à l'aide de la différence entre les variations de température détectées.

4. Procédé selon la revendication 1, 2 ou 3,
   **caractérisé en ce que**
   le chauffage de la zone centrale (H) de la membrane (M) est effectué à une température prédéterminée supérieure à la température de l'écoulement gazeux à détecter.

5. Procédé selon l'une quelconque des revendications précédentes,
   **caractérisé en ce que**
   le troisième site et le quatrième site sont choisis dans la région de bord de la membrane (M).

6. Dispositif pour déterminer des caractéristiques d'un écoulement gazeux, comprenant :

   - un dispositif de capteur (SE) avec une membrane (M) et une monture (EF) entourant celle-ci;
   - un dispositif de chauffage pour créer un profil de température prédéterminé sur la membrane (M);
   - un dispositif de détection (T1, T2) composé de deux capteurs de température pour détecter la variation du profil de température provoquée par l'écoulement gazeux guidé dans une direction d'écoulement prédéterminée (S) au-dessus de la membrane; et
   - un dispositif de détermination pour déterminer des caractéristiques de l'écoulement gazeux à l'aide de la variation détectée;
   **caractérisé par**
   sur la membrane

   ➢ un premier site en amont du dispositif de chauffage et

➢ un deuxième site en aval du dispositif de chauffage,
deux capteurs de température pour déterminer une variation de la température provoquée par l'écoulement gazeux au premier site et au deuxième site, et
un dispositif de régulation (R1, R2) pour réguler la température
➢ en un troisième site sur la membrane (M) en amont du premier site et
➢ en option, en un quatrième site en aval du deuxième site,

à une valeur correspondant à la valeur locale du profil de température prédéterminé.

**7.** Dispositif selon la revendication 6,
**caractérisé en ce que**
le dispositif de chauffage pour chauffer une zone centrale (H) de la membrane (M) à une température prédéterminée est prévu pour créer un profil de température trapézoïdal sur la membrane (M), le profil de température présentant dans la zone centrale un plateau, qui diminue de façon sensiblement linéaire vers la zone de bord.

**8.** Dispositif selon la revendication 6 ou 7,
**caractérisé en ce que**
le dispositif de détection (T1, T2) est configuré pour détecter la variation de la température provoquée par l'écoulement gazeux en un premier site sur la membrane (M) en amont de la zone centrale chauffée (H) et en un deuxième site sur la membrane (M) en aval de la zone centrale chauffée (H), et le dispositif de détermination est configuré pour déterminer des caractéristiques de l'écoulement gazeux à l'aide de la différence entre les variations de température détectées.

**9.** Dispositif selon l'une quelconque des revendications précédentes,
**caractérisé en ce que**
le troisième site et le quatrième site se trouvent dans la région de bord de la membrane (M).

**10.** Dispositif selon l'une quelconque des revendications précédentes,
**caractérisé en ce que**
le dispositif de capteur (SE) avec la membrane (M) et la monture (EF) entourant celle-ci est fabriqué en une seule pièce par la technologie de la micromécanique du silicium.

FIG 1

# FIG 2

NTP

dT1

dT2

ΔT

A
B

S

M

EF

SE

T

T1

H

T2

EP 1 250 604 B1

## FIG 3